(19) Europäisches Patentamt
European Patent Office
Office européen des brevets

(11) Numéro de publication : **0 497 685 A1**

(12) # DEMANDE DE BREVET EUROPEEN

(21) Numéro de dépôt : **92400215.7**

(22) Date de dépôt : **28.01.92**

(51) Int. Cl.$^5$ : **A01N 33/18,** A01N 41/06, A01N 41/10

(30) Priorité : **29.01.91 FR 9100995**

(43) Date de publication de la demande : **05.08.92 Bulletin 92/32**

(84) Etats contractants désignés : **AT CH DE ES FR GR IT LI**

(71) Demandeur : **C F P I**
**28 Boulevard Camélinat, Boîte Postale 75**
**F-92233 Gennevilliers Cédex (FR)**

(72) Inventeur : **Arcuset, Paul**
**Chemin des Rocailles**
**F-30400 Villeneuve les Avignon (FR)**
Inventeur : **Pecheur, Jacques**
**95 Ter, Rue de Colombes**
**F-92400 Courbevoie (FR)**
Inventeur : **Ambrosi, Dominique**
**3 Place Charras**
**F-92400 Courbevoie (FR)**
Inventeur : **Schapira, Joseph**
**32 Rue Miollis**
**F-75015 Paris (FR)**

(74) Mandataire : **Koch, Gustave et al**
**Cabinet PLASSERAUD 84, rue d'Amsterdam**
**F-75009 Paris (FR)**

(54) **Produit anti-bourgeons pour la vigne et d'autres végétaux ligneux et procédé pour sa mise en oeuvre.**

(57) Produit anti-bourgeons pour la vigne et d'autres végétaux ligneux, caractérisé par le fait qu'il comprend une quantité efficace d'au moins une dinitro-aniline en tant qu'agent préventif.

EP 0 497 685 A1

Jouve, 18, rue Saint-Denis, 75001 PARIS

L'invention a pour objet un produit anti-bourgeons pour la vigne et d'autres végétaux ligneux.

Par végétaux ligneux, on entend les arbres et arbustes ornementaux.

Elle vise également un procédé appelé ébourgeonnage pour la mise en oeuvre du susdit produit.

L'élimination des bourgeons dans le cas de la vigne et d'autres végétaux ligneux permet d'optimiser et régulariser la végétation de la plante traitée.

La difficulté réside toujours dans la suppression des bourgeons dits "dormants" situés à la base de certains rameaux, bourgeons quine sont pas systématiquement supprimés en même temps que le rameau concerné.

Dans le cas de la vigne, ce problème est particulièrement important.

A cet égard, un pied de vigne ou cep comprend un tronc dont la hauteur est variable suivant le mode de taille; de ce tronc partent les bras sur lesquels poussent, à leur tour, des ramifications appelées coursons; les coursons constituent les parties productives de la vigne. En effet, sur chacun des coursons se développent un ou deux pampres ou sarments productifs. L'espace situé entre deux coursons ou espace inter-coursons est constitué par une zone non productive appelée vieux bois.

Des rameaux ou sarments ou encore pampres indésirables se développent sur le tronc et le vieux bois des bras; on les élimine par une opération manuelle ou chimique dénommée "épamprage", opération à l'issue de laquelle on ne conserve que les sarments qui sont issus des coursons et qui ont principalement pour origine des sarments ayant végété l'année précédente.

L'épamprage est réalisé avant la floraison de la vigne lorsque les jeunes sarments sont encore herbacés et, de ce fait, très cassants.

Plus précisément et étant donné que la "sortie" des pampres, autrement dit le débourrement de la vigne, se produit au début du printemps, l'épamprage est réalisé traditionnellement un mois et demi à trois mois plus tard, c'est-à-dire juste avant la floraison.

Cette opération a pour but de tendre vers une production régulière et surtout une maturation homogène en unifiant la période de floraison et, de ce fait, la période de maturation.

Lorsque l'épamprage est réalisé trop tôt, il ne permet pas d'empêcher, après l'enlèvement des pampres indésirables, l'apparition de nouvelles pousses ou nouveaux sarments qui ont alors pour origine les bourgeons ou "yeux dormants" situés à la base des sarments.

L'invention a pour but, surtout, de remédier aux inconvénients de l'art antérieur; dans le cas plus particulièrement de la vigne ainsi que dans le cas d'autres végétaux ligneux, elle a pour but de fournir des moyens permettant d'empêcher l'apparition de rameaux ou pampres à partir de bourgeons appelés "yeux dormants" en détruisant lesdits bourgeons.

Autrement dit, l'invention a pour but de mettre à la disposition de l'utilisateur des moyens préventifs de lutte contre une végétation indésirable.

Or, il est du mérite de la Société Demanderesse d'avoir trouvé, à l'issue de recherches approfondies, que ce but était atteint grâce au produit anti-bourgeons conforme à l'invention qui est caractérisé en ce qu'il comprend une quantité efficace d'au moins une dinitroaniline en tant qu'agent préventif.

Les dinitro-anilines produisent un effet inhibiteur au niveau du bourgeon situé à la base du rameau ou pampre dans le cas de la vigne sur vieux bois. Il s'agit là d'un blocage de la végétation à venir.

Les dinitro-anilines mises en oeuvre dans le susdit produit conforme à l'invention présentent la formule générale suivante:

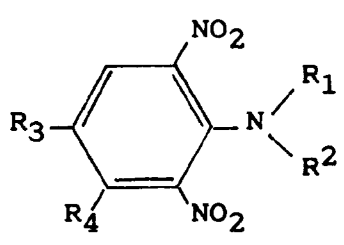

dans laquelle:

– $R_1$ représente un atome d'hydrogène, un radical alkyle inférieur en $C_1$ à $C_8$, éventuellement substitué ou un radical alcényle inférieur en $C_2$ à $C_4$;

– $R_2$ représente un radical alcényle inférieur en $C_2$ à $C_4$, un radical cycloalkyle en $C_3$ à $C_6$, un radical alkyle inférieur en $C_1$ à $C_8$ ou éventuellement substitué, ou encore un radical benzyle éventuellement substitué;

– $R_3$ représente un atome d'hydrogène, un atome d'halogène, un radical alkyle ou alcoxy inférieur en $C_1$ à $C_4$, ou un radical trifluorométhyle, cyano, $-SO_2NR_5R_6$ ou $-SO_2R_7$, $R_2$ et $R_3$ n'étant pas simultanément un

radical alkyle en $C_4$;

– $R_4$ représente un atome d'hydrogène, un atome d'halogène, un radical amino, un radical mono- et di-- (alkyle inférieur en $C_1$ à $C_6$) amino, alcoxyalcoxy en $C_2$ à $C_6$, alcoxy inférieur en $C_1$ à $C_4$, alkylthio inférieur en $C_1$ à $C_4$ ou alkyle inférieur en $C_1$ à $C_4$;

– $R_5$ et $R_6$ représentent chacun un atome d'hydrogène ou un radical alkyle inférieur en $C_1$ à $C_4$ et

– $R_7$ représente un radical alkyle inférieur en $C_1$ à $C_4$; étant entendu que, quand $R_1$ et $R_4$ représentent chacun un atome d'hydrogène, $R_2$ et $R_3$ ne représentent pas simultanément un radical alkyle en $C_1$ à $C_7$.

On désigne par "alkyle inférieur substitué" des radicaux alkyle comportant de 1 à 8 atomes de carbone et substitués par un substituant choisi dans le groupe comprenant les atomes d'halogène, les radicaux alcoxy en $C_1$-$C_2$, les radicaux amino, nitro, cyano, cycloalkyle en $C_3$-$C_6$ et alkylthio inférieur en $C_1$-$C_7$.

On préfère les composés dans lesquels $R_1$ et $R_2$ comportent au total 3 à 6 atomes de carbone ou un radical benzyle.

Des exemples illustratifs de radicaux alkyle inférieurs sont les radicaux méthyle, éthyle, propyle, isopropyle, butyle, isobutyle, sec-butyle, éthyl-1-propyle, méthyl-1-butyle, éthyl-1-butyle, heptyle, octyle et similaires.

Des exemples illustratifs de radicaux alcényle inférieurs sont les radicaux vinyle, allyle, propène-1-yle, isopropényle, butène-1-yle, butène-3-yle et similaires.

Des exemples illustratifs de radicaux cycloalkyle sont les radicaux cyclopropyle, cyclobutyle, cyclopentyle et cyclohexyle.

Des exemples illustratifs d'atomes d'halogène sont les atomes fluor, chlore, brome et iode. On préfère le chlore.

Les dinitro-anilines mises en oeuvre conformément à l'invention sont choisies, de préférence, dans le groupe comprenant:

– la N,N-dipropyltrifluorométhyl-4-dinitro-2,6-aniline,
– la N-éthyl-N-butyl-trifluorométhyl-4-dinitro-2,6-aniline,
– la dinitro-2,6-trifluorométhyl-4-N-propyl-N-(cyclopropylméthyl)aniline,
– la diméthyl-3,4-dinitro-2,6-N-(éthyl-1-propyl)aniline,
– la N,N-diéthyl-trifluorométhyl-4-dinitro-2,6-aniline,
– la N,N-dipropyl-méthylsulfonyl-4-dinitro-2,6-aniline,
– la N,N-dipropyl-isopropyl-4-dinitro-2,6-aniline,
– la N,N-dipropyl-aminosulfonyl-4-dinitro-2,6-aniline,
– la N-(chloro-2-éthyl)-N-propyl-trifluorométhyl-4-dinitro-2,6-aniline,
– la N-(méthyl-2-propényl-2)-N-éthyl-trifluorométhyl-4-dinitro-2,6-aniline,
– la N,N-dipropyl-amino-3-trifluorométhyl-4-dinitro-2,6-aniline,
– la N-(chloro-2-fluoro-6-benzyl)-N-éthyl-trifluorométhyl-4-dinitro-2,6-aniline.

On utilise de préférence, dans les produits anti-bourgeons, des adjuvants classiquement utilisés en arboriculture et viticulture.

Les susdits produits peuvent être présentés sous la forme de:

– poudres mouillables,
– granulés délitables,
– suspensions concentrées,
– concentrés émulsionnables,
– émulsions aqueuses,

de même que sous la forme de:

– poudres solubles,
– solutions vraies,
– émulsions de type huileux,

ou en combinaison de ces formes.

Lorsque le produit conforme à l'invention se présente sous l'une quelconque des formes liquides ci-dessus, il comprend, outre au moins une dinitro-aniline, un ou plusieurs agents de surface de type ionique ou non ionique ainsi qu'un diluant ou charge, ou un vecteur.

Lorsque le produit conforme à l'invention se présente sous l'une quelconque des formes solides ci-dessus, il comprend, outre au moins une dinitro-aniline, un ou plusieurs diluants ou charges solides ainsi qu'un ou plusieurs agents de surface.

Les agents de surface peuvent être choisis parmi les agents de surface non ioniques et anioniques cités dans la publication annuelle (North American Edition et International Edition) éditée par McCutcheon's Division MC Publishing Company et relative aux "Emulsifiers & Detergents" ou dans l'index des surfactants publié par B. Parant chez D.T.A. (France).

Les agents de surface non ioniques utilisables sont ceux provenant de la condensation d'une ou plusieurs

moles d'oxyde d'éthylène et/ou de propylène avec des alcools courts ou gras, des alcoylphénols, des amines grasses, des amides gras, des polystyrylphénols.

Les agents de surface anioniques comprennent les alcoylarylsulfonates sous forme de sels de métaux alcalins, alcalino-terreux ou d'alcanolamines, les savons, les esters phosphoniques de produits du type non ionique cités précédemment, les polynaphtylméthane-polysulfonates et leurs dérivés alcoylés, les lignosulfonates et les polymères présentant plusieurs fonctions carboxyliques.

Le diluant est choisi dans le groupe comprenant l'eau, l'acétophénone, la cyclohexanone, l'isophorone, le toluène, le xylène, le diméthyl-sulfoxyde (ou DMSO) et les huiles minérales, animales ou végétales; on souligne que, dans la mesure où ils sont liquides, les agents de surface, anioniques ou non ioniques, peuvent également servir de diluants ou de vecteurs.

Les diluants ou charges solides sont choisis dans le groupe comprenant la silice, le talc, les argiles comme le kaolin et la bentonite.

Outre le diluant ou charge, le produit conforme à l'invention, lorsqu'il se présente à l'état solide, peut comprendre des agents mouillants ou dispersants qui, dans l'éventualité où ils sont solides, peuvent également servir de diluants ou de charges.

Le produit conforme à l'invention, lorsqu'il se présente à l'état de poudre, peut être obtenu par broyage d'au moins une dinitro-aniline avec une charge solide ou par imprégnation de cette charge avec la ou les dinitro-anilines ou une solution de cette ou ces dinitro-anilines dans un solvant volatil qui est subséquemment éliminé par évaporation, le produit restant étant broyé pour fournir une poudre.

Pour préparer un produit conforme à l'invention se présentant sous forme granulée, on peut absorber la ou les dinitro-anilines telle(s) quelle(s) ou après dissolution dans un solvant volatil sur une charge pulvérulente ou une charge solide sous forme déjà granulée, le solvant étant ensuite éliminé par évaporation.

Le produit conforme à l'invention peut comprendre, de plus, des adjuvants tels que des agents adhésifs, des agents protecteurs, des agents délitants, des agents pénétrants, des agents stabilisants, des agents réducteurs de volatilité, des séquestrants, des antimottants, des colorants, et des inhibiteurs de corrosion; il est à noter que, dans certains cas, ces adjuvants peuvent également servir de diluants ou de vecteurs.

Pour préparer le produit conforme à l'invention à partir d'un concentré liquide ou solide, on peut avoir recours aux diluants identifiés ci-dessus.

Il est intéressant de disposer d'un concentré se présentant sous forme auto-émulsionnable contenant au moins une dinitro-aniline dissoute dans un agent émulsifiant ou dans un solvant; en préparant à partir d'un tel concentré le produit anti-bourgeons par addition d'eau, on obtient un produit liquide conforme à l'invention prêt à l'emploi.

Il est indiqué que les concentrés liquides dans lesquels le diluant ou la charge est constitué par une huile, peuvent être utilisés sans dilution par toute technique appropriée comme la pulvérisation à bas ou très bas volume ou la pulvérisation électrostatique.

Enfin, l'utilisation de bouillies prêtes à l'emploi contenant le ou les constituants actifs à la concentration nécessaire à l'obtention de résultats biologiques fait également partie de l'invention.

Le produit conforme à l'invention comprend, au sein d'un des véhicules d'application bien connus de l'homme de l'art, de 100 à 2000 g d'au moins une dinitro-aniline par hectolitre et, de préférence, de 200 à 1000 g d'au moins une dinitro-aniline par hectolitre, la dose optimale étant choisie à l'intérieur de ce domaine en fonction de la nature du végétal à traiter, de son état de croissance et du mode d'application.

Le procédé d'élimination des bourgeons ou ébourgeonnage dans le cas de la vigne et d'autres végétaux ligneux est caractérisé en ce qu'on applique sur le végétal ligneux, plus particulièrement sur la vigne à un moment situé entre le débourrement et le stade 1 à 2 feuilles étalées, le produit conforme à l'invention à la concentration définie ci-dessus en une quantité qui, dans le cas de la vigne, est de 20 à 500 ml par cep, de préférence, de 25 à 150 ml par cep et, plus préférentiellement encore, de 30 à 70 ml par cep.

Un avantage particulier, dans le cas du traitement de la vigne, de l'application du susdit produit sur vieux bois réside dans le fait qu'il devient possible de réaliser l'élimination des bourgeons à un stade végétatif précoce de la vigne. En effet, si l'épamprage classique doit être réalisé juste avant la floraison et le plus tard possible pour ne pas laisser le temps aux bourgeons ou "yeux dormants" de produire d'autres pampres, le produit conforme à l'invention, quant à lui, est pleinement efficace dès l'apparition desdits bourgeons qu'il inhibe de façon préventive.

On peut réaliser l'application sur le terrain du produit conforme à l'invention selon des techniques classiques utilisant, par exemple, des pulvérisateurs à pompe à main, à moteur ou à pression préalable, équipés de rampes ou de lances servant à l'application, bien connus de l'homme de l'art. Pour les applications localisées, on peut utiliser par exemple des pinceaux alimentés par gravité ou par pression, ou tout autre système tel que les gants ou les éponges enduits de produit concentré ou dilué.

Un avantage inattendu de l'invention telle que décrite ci-dessus réside dans le fait qu'outre l'effet constaté

l'année du traitement, on peut s'attendre à une rémanence de l'effet du produit conforme à l'invention, appliqué sur le végétal ligneux et plus particulièrement sur la vigne dès lors que ce produit a été appliqué au moins un an auparavant.

L'exemple qui suit permettra de mieux comprendre l'invention; il n'est pas limitatif et n'est donné qu'à titre illustratif en rapport avec des modes de réalisation avantageux.

## EXEMPLE

Deux essais ont été réalisés sur deux cépages différents: le Muscat et le Cinsaut.

Pour chacun des essais, on a appliqué sur les troncs des ceps de vignes au stade deux feuilles étalées, au moyen de lances équipées de buses de pulvérisation et sur les bras desdits ceps au moyen de pinceaux, un produit anti-bourgeons conforme à l'invention constitué d'une dinitro-aniline.

Puis, plus tard, au moment de la floraison, période où se situe normalement l'épamprage classique (ou juste avant cette période), on a compté le nombre de pampres subsistant après traitement et on a calculé le pourcentage de ces pampres par rapport à un témoin non traité pour lequel le nombre de pampres est considéré comme étant de 100%.

Les dinitro-anilines utilisées sont:

– la N-(chloro-2-fluoro-6-benzyl)-N-éthyl-trifluorométhyl-4-dinitro-2,6-aniline connue sous le nom de flumétraline,

– la diméthyl-3,4-dinitro-2,6-N-(éthyl-1-propyl)aniline connue sous le nom de pendiméthaline.

Dans le tableau, on a récapitulé les résultats de ces essais.

### TABLEAU

| Matière active (m.a.) | Doses m.a. en g/hl | ESSAI SUR MUSCAT | | ESSAI SUR CINSAUT | |
|---|---|---|---|---|---|
| | | Pourcentage des pampres restant par cep | | | |
| | | Troncs | Bras | Troncs | Bras |
| Flumétraline | 540 | 65 | 35 | 34 | 44 |
| Pendiméthaline | 540 | 82 | 44 | 57 | 43 |
| Témoin | 0 | 100 | 100 | 100 | 100 |

Les résultats réunis dans le tableau montrent qu'aux doses utilisées lors des deux essais, le résultat obtenu est très net.

Dans certains cas, les résultats obtenus sur les bras sont meilleurs que ceux obtenus sur les troncs; ceci pourrait être en corrélation directe --la Société Demanderesse n'entendant toutefois pas être liée par cette supposition-- avec les modes d'application du produit anti-bourgeons.

## Revendications

1. Produit anti-bourgeons pour la vigne et d'autres végétaux ligneux, caractérisé par le fait qu'il comprend une quantité efficace d'au moins une dinitro-aniline en tant qu'agent préventif.

2. Produit selon la revendication 1, caractérisé par le fait que la dinitro-aniline présente la formule générale:

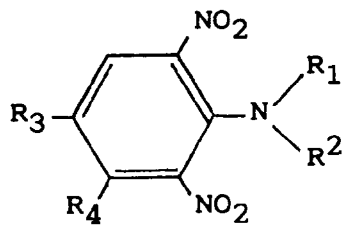

dans laquelle:

- $R_1$ représente un atome d'hydrogène, un radical alkyle inférieur en $C_1$ à $C_8$, éventuellement substitué ou un radical alcényle inférieur en $C_2$ à $C_4$;
- $R_2$ représente un radical alcényle inférieur en $C_2$ à $C_4$, un radical cycloalkyle en $C_3$ à $C_6$, un radical alkyle inférieur en $C_1$ à $C_8$ ou éventuellement substitué, ou encore un radical benzyle éventuellement substitué;
- $R_3$ représente un atome d'hydrogène, un atome d'halogène, un radical alkyle ou alcoxy inférieur en $C_1$ à $C_4$, ou un radical trifluorométhyle, cyano, $-SO_2NR_5R_6$ ou $-SO_2R_7$, $R_2$ et $R_3$ n'étant pas simultanément un radical alkyle en $C_4$;
- $R_4$ représente un atome d'hydrogène, un atome d'halogène, un radical amino, un radical mono- et di-(alkyle inférieur en $C_1$ à $C_6$) amino, alcoxyalcoxy en $C_2$ à $C_6$, alcoxy inférieur en $C_1$ à $C_4$, alkylthio inférieur en $C_1$ à $C_4$ ou alkyle inférieur en $C_1$ à $C_4$;
- $R_5$ et $R_6$ représentent chacun un atome d'hydrogène ou un radical alkyle inférieur en $C_1$ à $C_4$ et
- $R_7$ représente un radical alkyle inférieur en $C_1$ à $C_4$; étant entendu que, quand $R_1$ et $R_4$ représentent chacun un atome d'hydrogène, $R_2$ et $R_3$ ne représentent pas simultanément un radical alkyle en $C_1$ à $C_7$.

3. Produit selon la revendication 2, caractérisé par le fait que, lorsque le substituant $R_1$ ou $R_2$ est un radical alkyle inférieur substitué, il présente de 1 à 8 atomes de carbone, le substituant étant choisi dans le groupe comprenant les atomes d'halogène, les radicaux alcoxy en $C_1$-$C_2$, les radicaux amino, nitro, cyano, cycloalkyle en $C_3$-$C_6$ et alkylthio inférieur en $C_1$-$C_7$.

4. Produit selon la revendication 2, caractérisé par le fait que la dinitro-aniline est choisie dans le groupe comprenant:
   - la N,N-dipropyltrifluorométhyl-4-dinitro-2,6-aniline,
   - la N-éthyl-N-butyl-trifluorométhyl-4-dinitro-2,6-aniline,
   - la dinitro-2,6-trifluorométhyl-4-N-propyl-N-(cyclopropylméthyl)aniline,
   - la diméthyl-3,4-dinitro-2,6-N-(éthyl-1-propyl)aniline,
   - la N,N-diéthyl-trifluorométhyl-4-dinitro-2,6-aniline,
   - la N,N-dipropyl-méthylsulfonyl-4-dinitro-2,6-aniline,
   - la N,N-dipropyl-isopropyl-4-dinitro-2,6-aniline,
   - la N,N-dipropyl-aminosulfonyl-4-dinitro-2,6-aniline,
   - la N-(chloro-2-éthyl)-N-propyl-trifluorométhyl-4-dinitro-2,6-aniline,
   - la N-(méthyl-2-propényl-2)-N-éthyl-trifluorométhyl-4-dinitro-2,6-aniline,
   - la N,N-dipropyl-amino-3-trifluorométhyl-4-dinitro-2,6-aniline,
   - la N-(chloro-2-fluoro-6-benzyl)-N-éthyl-trifluorométhyl-4-dinitro-2,6-aniline.

5. Produit selon l'une des revendications 1 à 4, caractérisé par le fait qu'il comprend, au sein d'un véhicule d'application, de 100 à 2000 g d'au moins une dinitro-aniline par hectolitre et, de préférence, de 200 à 1000 g d'au moins une dinitro-aniline par hectolitre.

6. Procédé d'élimination des bourgeons dans le cas de la vigne et d'autres végétaux ligneux, caractérisé par le fait que l'on applique sur le végétal ligneux, plus particulièrement sur la vigne à un moment situé entre le débourrement et le stade 1 à 2 feuilles étalées, le produit selon la revendication 5 en une quantité qui, dans le cas de la vigne, est de 20 à 500 ml par cep, de préférence, de 25 à 150 ml par cep et, plus préférentiellement encore, de 30 à 70 ml par cep.

Office européen des brevets

# RAPPORT DE RECHERCHE EUROPEENNE

Numero de la demande

EP 92 40 0215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2 143 851 (AMERICAN CYANAMID)<br>* revendications; exemple 194 *<br>--- | 1-6 | A01N33/18<br>A01N41/06<br>A01N41/10 |
| X | FR-A-2 322 540 (AMCHEM PRODUCTS)<br>* page 3, ligne 9 - ligne 18; revendications *<br>--- | 1-6 | |
| X | FR-A-2 295 011 (CIBA-GEIGY)<br>* revendications 7-11 *<br>--- | 1-6 | |
| X | US-A-3 880 643 (A.R. COOKE ET. AL.)<br>* colonne 1, ligne 9 - ligne 21 *<br>----- | 1-6 | |

DOMAINES TECHNIQUES RECHERCHES (Int. Cl.5 )

A01N

Le présent rapport a été établi pour toutes les revendications

| Lieu de la recherche | Date d'achèvement de la recherche | Examinateur |
|---|---|---|
| LA HAYE | 01 JANVIER 1980 | DECORTE D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)